# EUROPEAN PATENT SPECIFICATION

(11) **EP 2 323 839 B1**
(45) Date of publication and mention of the grant of the patent: **23.03.2016**
(21) Application number: 09788422.5
(22) Date of filing: 10.08.2009
(51) Int. Cl.: B30B 9/06, B29B 17/00

(54) **WASTE PLASTICS DRYING AND SHREDDING MACHINE**
TROCKNUNGS- UND ZERKLEINERUNGSMASCHINE FÜR KUNSTSTOFFABFÄLLE
MACHINE DE SÉCHAGE ET DE DÉCHIQUETAGE DE MATIÈRES PLASTIQUES USAGÉES

(30) Priority: 09.08.2008 PL 38585108
(43) Date of publication of application: 25.05.2011
(73) Proprietor: Piskorz, Waldemar, 21-509 Koden (PL)
(72) Inventor: Piskorz, Waldemar, 21-509 Koden (PL)
(74) Representative: Belz, Anna
(86) International application number: PCT/PL2009/050015
(87) International publication number: WO 2010/019060

(56) References cited:
- DE-A1- 1 454 875
- DE-U1- 20 207 067
- FR-A- 617 721
- JP-A- 8 281 644
- US-A- 4 520 724
- US-A- 5 211 841

## Description

The subject matter of the invention is a waste plastics drying and shredding machine designed in particular for drying and shredding washed waste film of a large size.

According to the patent specification No. EP0090373 published by the European Patent Office, there is a machine for dewatering shredded film consisting of a conical screw rotating inside a cylinder equipped with a chute, at the end of which there is a sieve basket. The narrowing section of the connection terminal causes resistance, waste compression and removal of water which is extracted by a pump.

According to the patent application No JP 08281644, regarding fluff processing method which improves a volume reduction rate when fluff is transported and stored, fluff obtained by grinding through cutting process is fed to process molding machine in a press and the extruded fluff is further squeezed to remove water.

It is also known from the patent application No FR 617721 universal press with continuous output and variable clamping containing all the parts necessary for the vinification into white or red wines of ordinary or quality wines.

In accordance with the invention the drying and shredding machine consists of three units connected in sequence, namely of a pressing unit, a sieve, and a shredder. The pressing unit is equipped with a chute linked to the cylinder where there is a piston mechanism, however, the chute outlet is located before the piston dead centre. The sieve shaped like a truncated cone narrowing towards the outlet is attached to the end of the cylinder. At the outlet there is the shredder, the diameter of which is similar to the diameter of the sieve outlet, equipped with a face cutter, powered by an electric motor. The cutter has teeth situated slantwise in relation to the radius and slanted in such a way that their length increases towards the centre, thus giving the cutter a conical profile. In one side of the shredder casing there is an outlet connection terminal.

The waste film fed through the chute is pushed in the direction of the sieve where it is compressed and dewatered. The compressed sheets of film, slightly heated due to higher pressure, pass to the shredder where they are tom by the teeth on the disk of the cutter. As a result of that, the plastic film heats up and tears apart and the shreds leaving the shredder quickly lose remnant water.

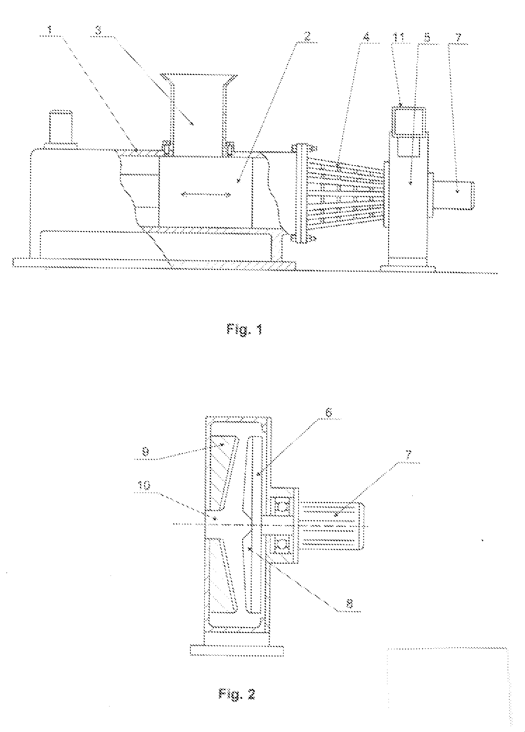

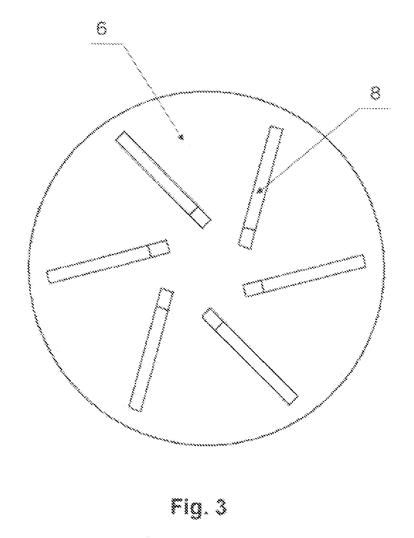

An example of the drying and shredding machine constructed according to the invention is presented in the diagram figures in which fig.1 shows a longitudinal section of the machine, fig. 2 - an enlarged section of the shredder, fig. 3 - a frontal view of the face cutter.

In the cylinder **1** there is a mechanically powered piston **2.** The chute **3** of the cylinder **1** is located before the piston dead centre **2.** At the end of the cylinder **1** there is a conical sieve **4** which narrows towards the outlet where the shredder **5** is attached. In the casing of the shredder **5** there is a face cutter **6,** set on a rotating axle and powered by an electric motor. At the front of the cutter **6** there are teeth **8** situated slantwise in relation to the radius of the cutter **5.** The teeth **8** have a varying length increasing towards the centre, therefore in the sectional view the cutter **5** has a conical shape. A thrust block **9** constitutes the rear side of the casing and it is situated opposite the cutter **5** and shaped conically, but there is a gap between the cutter **5** and thrust block **9.** In the thrust block **9** there is a central hole **10** connecting the sieve outlet **4** with the inside of the shredder **5.** In the shredder casing **5** there is an outlet connection terminal **11** located on the side of the casing and tangential to the periphery of the cutter **6.**

## Claims

1. The waste plastic drying and shredding machine consisting of a sieve basket and a pressing unit, wherein the pressing unit is consisting of a cylinder **(1)** and a sliding non-return piston (2) wherein the outlet of the cylinder (1) is connected with the conical sieve **(4) characterized in that** the section of the conical sieve narrows towards the outlet, and that the outlet of the conical sieve **(4)** is connected to a shredder **(5)** inside which a face cutter **(6)** is located, the face cutter **(6)** has teeth **(8)** situated slantwise in relation to the radius, and on the casing of the shredder **(5)** there is an outlet connection terminal **(11)** located tangentially to the periphery of the face cutter **(6).**

2. The machine in accordance to claim 1 **characterised in that** the teeth (8) on the face cutter (6) have a varying length increasing towards the rotating axle of the face cutter (6) so that in the sectional view it has a conical shape.

## Patentansprüche

1. Vorrichtung zum Trocknen und zur Zerkleinerung von Kunststoffabfällen, bestehend aus einem Siebkorb und einem Presswerkzeug, das aus einem Zylinder (1) und einem hin- und hergehenden Kolben (2) besteht, in dem die Mündung des Zylinders mit einem kegelförmigen Sieb (4) verbunden ist, **gekennzeichnet dadurch, dass** ein Teil des Siebs (4) in Richtung des Auslasses verjüngt und der Auslass des Siebs (4) mit einem Zerreisser (5) verbunden ist, in dem sich ein rotierender Stirnfräser (6) befindet. Der Stirnfräser (6) weist die schräg angeordneten Zähne (8) in Bezug auf den Radius auf und am Gehäuse des Zerreißers (5) befindet sich ein Austrittsstutzen (11), der tangential zum Umfang des Stirnfräsers (6) liegt.

2. Vorrichtung nach Anspruch 1 **gekennzeichnet dadurch, dass** die Zähne (8) des Stirnfräsers (6) eine variable Höhe aufweisen, die sich in Richtung der Drehachse des Stirnfräsers (6) vergrößert und ihm in dem Axialschnitt ein konisches Profil verleihen.

## Revendications

1. Equipement pour sécher et concasser les déchets en plastique qui se compose d'un panier tamis et d'un ensemble de compression, à son tour l'ensemble de compression se compose d'un cylindre (1) et d'un piston (2) qui effectuent un mouvement va-et-vient, où la sortie du cylindre est reliée avec un tamis conique (4); **cet équipement se caractérise par** une partie du tamis (4) qui se rétrécit dans le sens de la sortie et par la sortie du tamis (5) qui est reliée à une broyeuse, à l'intérieur de laquelle il y a une fraise frontale rotative (6) qui possède des dents (8) placées obliquement par rapport au rayon, et par une buse d'échappement (11) sur le corps de la broyeuse, placée en tangente par rapport au périmètre de la fraise frontale (6).

2. Equipement d'après la réserve 1 **qui se caractérise par** les dents (8) de la fraise frontale qui ont une hauteur variable qui augmente dans le sens de la rotation de la fraise (6) frontale, en lui donnant un aspect conique dans la coupe axiale.
